# EUROPEAN PATENT APPLICATION

(11) **EP 2 784 629 A2**
(43) Date of publication of application: **01.10.2014**
(21) Application number: 14156083.9
(22) Date of filing: 21.02.2014
(51) Int. Cl.: G06F 3/01, G06F 1/16, G06F 3/041

(54) **Method for controlling portable device equipped with flexible display, and portable device using the method**

(30) Priority: 25.03.2013 KR 20130031545
(71) Applicant: Samsung Electronics Co., Ltd., Suwon-si Gyeonggi-do 443-742 (KR)
(72) Inventor: Park, Hyungjin, 443-742 Gyeonggi-do (KR); Kim, Kyungjung, 443-742 Gyeonggi-do (KR); Park, Sungchul, 443-742 Gyeonggi-do (KR); Hong, Hyunju, 443-742 Gyeonggi-do (KR)
(74) Representative: Birchenough, Lewis

(57) **Abstract**

The present disclosure relates to a method for controlling a portable device equipped with a flexible display, and a portable device using the method, and more particularly, to a method for controlling a portable device based on whether an edge portion of a flexible display is gripped, and a portable device using the method. The method includes detecting bending of the flexible display.; The method also includes determining whether an edge portion of the flexible display is gripped. The method further includes performing a control operation of the portable device corresponding to the bending when the edge portion is gripped.

## Description

### TECHNICAL FIELD

The present disclosure relates to a method for controlling a portable device equipped with a flexible display, and a portable device using the method, and more particularly, to a method for controlling a portable device based on whether an edge portion of a flexible display is gripped, and a portable device using the method.

### BACKGROUND

In recent years, as a smart phone has been introduced, a current portable device has complex functions such as photographing a photo or a moving image, playback of a music file or a moving image, game, reception of broadcasting, and wireless Internet support, and is implemented in the form of a composite multimedia player. Accordingly, the portable device has been developed to a new form in view of hardware or software in order to reinforce portability and convenience while satisfying a desire of a user.

The flexible display is an example of such development, and can be folded or bent with a screen of a flexible form to improve portability of a portable device. Since the flexible display has flexibility and can control the portable device by using the flexibility, the flexible display can be bent in the unintended state. In this case, an undesirable control operation may be performed.

### SUMMARY

To address the above-discussed deficiencies, it is a primary object to provide a method for controlling a portable device including a flexible display which determines whether an edge is gripped through a sensor included in an edge portion to perform a control operation according to a determination result, and a portable device using the method.

The present disclosure further provides a method for controlling a portable device which controls the portable device by using bending of a flexible display in a state in which an edge portion is gripped, and a portable device using the method.

In accordance with an aspect of the present disclosure, a portable device includes a flexible display. The flexible display of the portable device is used to control the portable device. The portable device detects bending of the flexible display. The portable device also determines whether an edge portion of the flexible display is gripped. Furthermore, the portable device performs a control operation corresponding to the bending when the edge portion is gripped. The determining whether an edge portion of the flexible display is gripped includes determining whether at least two edge portions of the flexible display are gripped. The performing of the control operation of the portable device includes performing the control operation when the at least two edge portions are gripped. The determining whether an edge portion of the flexible display is gripped includes receiving a control signal from at least one sensor disposed at the edge portion of the flexible display and detecting that the edge portion is gripped according to the control signal. The receiving of the control signal includes receiving the control signal generated according to detection of at least one of a touch input, a proximity input, and a pressure input generated at the edge portion. The receiving of the control signal includes receiving the control signal generated when a human body is detected around the edge portion.

In accordance with an aspect of the present disclosure, a method for controlling a portable device equipped with a flexible display further includes detecting bending of the flexible display in a state in which the edge portion is gripped and performing a control operation corresponding to the bending. The performing of the control operation includes dividing an electronic book display screen according to bending of a first region of the flexible display.

In accordance with an aspect of the present disclosure, a method for controlling a portable device equipped with a flexible display further includes detecting bending of a second region of the flexible display in a state in which the edge portion is gripped and performing a page turning of the electronic book displayed on the second region. The first region and the second region are bent in different directions. The performing of the page turning of the electronic book includes controlling a speed of the page turning based on a curvature for the bending of the second region.

In accordance with another aspect of the present disclosure, a portable device includes a flexible display, a sensor unit, and a controller. The sensor unit is configured to detect whether the flexible display is bent and an edge portion of the flexible display is gripped. The controller configured to determine whether an edge portion of the flexible display is gripped when bending of the flexible display is detected through the sensor unit and to perform a control operation of the portable device corresponding to the bending when the edge portion is gripped. The controller is configured to determine whether at least two edge portions of the flexible display are gripped through the sensor unit and to perform the control operation when the at least two edge portions are gripped. The sensor unit is disposed at the edge portion of the flexible display. The sensor unit is configured to generate a control signal based on at least one of a touch input, a proximity input, or a pressure input detected at the edge portion. The sensor unit is also configured to send the generated control signal to the controller. The controller is configured to determine that the edge portion is gripped according to the control signal. The sensor unit includes at least one of a touch sensor, a proximity sensor, an electromagnetic sensor, or a pressure sensor. The sensor unit is configured to generate a control signal based on a state in which a human body is detected around the edge portion. The controller is configured to determine that the edge portion is gripped according to the control signal. The sensor unit includes at least one of an optical sensor, a temperature sensor, or a humidity sensor. The controller is configured to perform a control operation corresponding to a bending when the bending of the flexible display is detected in a state in which the edge portion is gripped.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a block diagram illustrating an example configuration of a portable device according to this disclosure;
FIGS. 2A and 2B are views illustrating an example bent portable device according to this disclosure;
FIG. 3 is a flowchart illustrating an example method for controlling a portable device according to this disclosure;
FIG. 4 is a view illustrating an example control operation according to this disclosure; and
FIG. 5 is a view illustrating an example control operation according to this disclosure.

### DETAILED DESCRIPTION

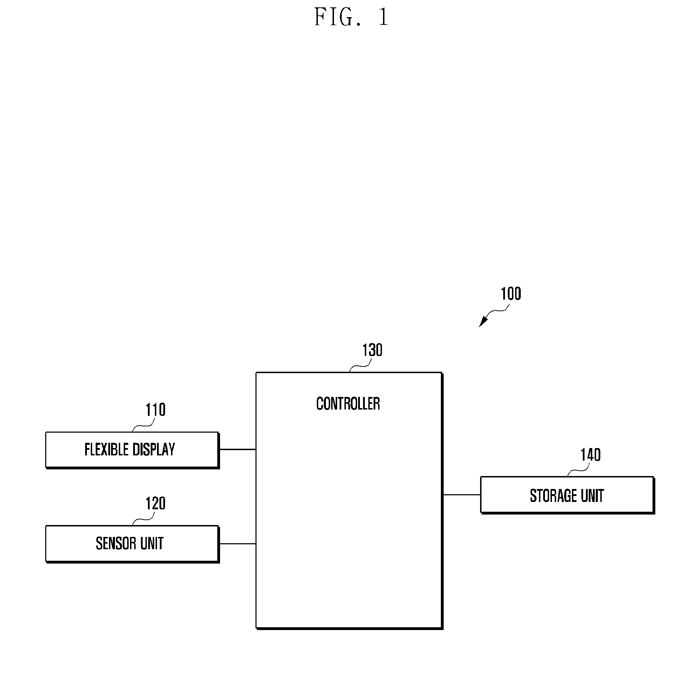

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged portable device. Embodiments of the present disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of the present disclosure.

The present disclosure is applicable to the control of a portable device including a flexible display.

Further, the present disclosure relates to a portable device including a flexible display, and is applicable to general electronic terminals such as a Smart Phone, a Portable Terminal, a Mobile Terminal, a Personal Digital Assistant (PDA), a Portable Multimedia Player (PMP) terminal, a Note Pad, a Wibro terminal, and a Tablet PC and various devices to which the flexible display is applicable.

Hereinafter, embodiments of the present disclosure are described with reference to the accompanying drawings in detail.

FIG. 1 is a block diagram illustrating an example configuration of a portable device according to this disclosure.

Referring to FIG. 1, the portable device 100 can include a flexible display 110, a sensor unit 120, a controller 130, and a storage unit 140.

The flexible display 110 can be disposed at one of a front surface or a rear surface of the portable device 100.

The flexible display 110 is a display which can be bent and can be manufactured by using a plastic substrate instead of a glass substrate. The flexible display 110 can be configured to detect a bent state and a bent region by using a sensor connected to the sensor unit 120 or which is internally mounted.

In particular, the flexible display 110 can be configured to detect a user input generated from the flexible display 110 through the sensor unit 120 or the sensor connected to the flexible display 110. For example, the flexible display 110 can be configured to detect a touch input, a proximity input, or a hovering input by using a touch sensor, a proximity sensor, a pressure sensor, or an infrared sensor. The sensor can be connected to the flexible display 110 in a pad type or a film type.

According to the embodiment of the present disclosure, the flexible display 110 can be configured to detect a grip on an edge portion of the flexible display 110 through the sensor. That is, the flexible display 110 can be configured to detect whether the edge portion is gripped by the user based on whether the user input is detected or a human body exists in the edge portion. In this case, the flexible display 110 can include a separate sensor which is disposed at the edge portion in order to detect that the edge portion is gripped.

The flexible display 110 can be configured to display (output) information processed by the portable device 100. For example, the flexible display 110 can be configured to display information corresponding to a currently driven application, program, or service together with User Interface (UI) or Graphic User Interface (GUI).

The sensor unit 120 can include a plurality of sensors to detect a current state of the portable device 100. The sensor unit 120 can be configured to generate a control signal corresponding to the detected state and to send the generated control signal to the controller 130. The sensor unit 120 can include a touch sensor, a proximity sensor, and an electromagnetic sensor.

The touch sensor can be configured to detect a touch input of the user. For example, the touch sensor can have the form of a touch film, a touch sheet, and a touch pad. The touch sensor can be configured to detect a touch input and to send the detected touch signal to the controller 130. The controller 130 can be configured to analyze the touch signal to perform an operation corresponding to the touch signal. Further, information corresponding to the detected signal can be displayed on the flexible display 110. The touch sensor can be configured to receive an operation signal according to a touch input of the user by various input means. The touch sensor can be configured to receive an operation signal by a body (e.g., hand) of the user, a physical tool, a stylus pen, and an operation button which may be included in the stylus pen. The touch sensor can be configured to detect a proximity input within a certain distance as well as a direct touch input according to an implementation type.

The proximity sensor can be configured to detect a presence, an approach, a movement, a direction, a speed, or a shape of an object generated in a detecting side of the flexible display 110 by using an electromagnetic force without a mechanical contact.

The proximity sensor can be one of a transmission photoelectric sensor, a direct reflection photoelectric sensor, a mirror reflection photoelectric sensor, a high frequency oscillating proximity sensor, a capacitive proximity sensor, a magnetic proximity sensor, or an infrared proximity sensor.

The pressure sensor can be configured to detect pressure applied to the flexible display 110. The infrared sensor can be configured to radiate infrared ray and to detect the infrared ray reflected and returned by a user hand. The infrared sensor can be disposed at a side, a bezel region, a corner, and an edge portion of the flexible display 110 to detect a grip generated at the edge portion.

In addition, the sensor unit 120 can include at least one of a motion sensor, a temperature sensor, a tension sensor, a current sensor, a tactile sensor, or a tilt sensor.

The controller 130 can be configured to control respective constituent elements for an overall operation of the portable device 100. For example, the controller 130 can be configure to control an operation of the portable device 100 based on an input through the flexible display 110.

According to the embodiment of the present disclosure, when bending of the flexible display 110 is detected, the controller 130 can be configured to perform a control operation corresponding to bending based on whether a user input is detected in an edge portion of the flexible display 110.

An operation of the controller 130 will be described herein with reference to the accompanying drawings.

The storage unit 140 can be configured to store programs or commands for the portable device 100. The controller 130 can be configured to perform programs or commands stored in the storage unit 140.

The storage unit 140 can include a storage medium having at least one type of a flash memory type, a hard disk type, a multimedia card micro type, a memory of card type (such as an SD, XD memory, or the like), Random Access Memory (RAM), Static Random Access Memory (SRAM), Read-Only Memory (ROM), Electrically Erasable Programmable Read-Only Memory (EEPROM), Programmable Read-Only Memory (PROM), Magnetic RAM (MRAM), a magnetic disc, and an optical disc.

Since constituent elements as shown in FIG. 1 can be non-essential, a portable device 100 of the present disclosure can include more or fewer constituent elements.

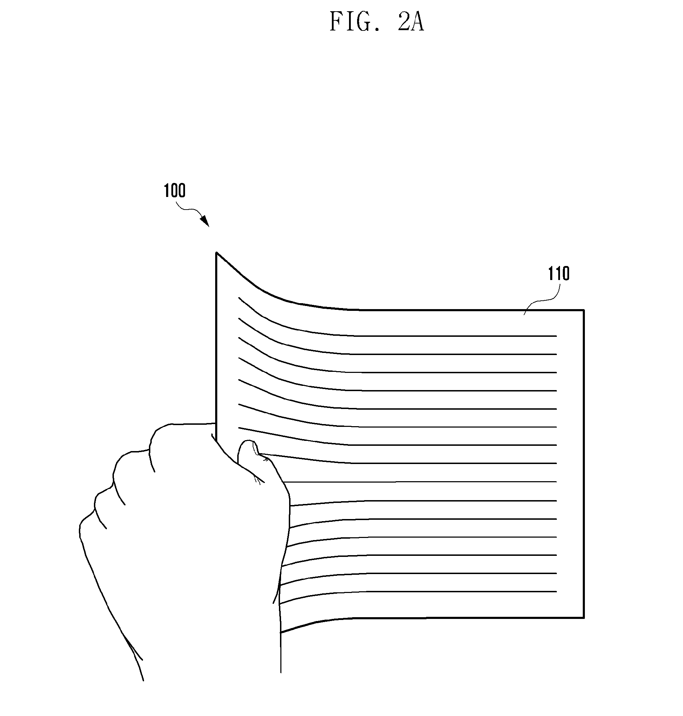

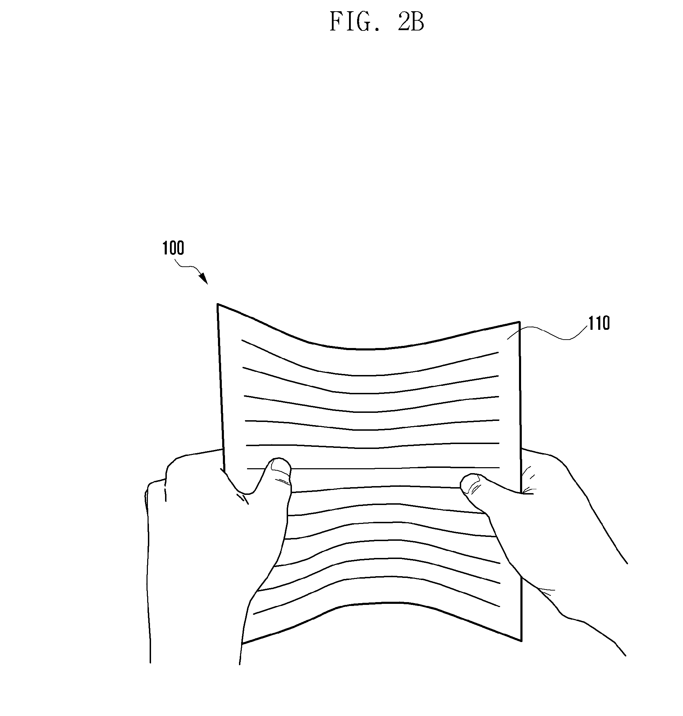

FIGS. 2A and 2B are views illustrating examples of a bent portable device according to this disclosure. FIGS. 2A and 2B illustrate examples of a bent flexible display 110 of the portable device 100 according to this disclosure.

Referring to FIG. 2A, a user can bend the flexible display 110 by lifting one edge of the flexible display 110. In this case, the portable device 100 of the related art can perform a control operation according to bending of the flexible display 110. However, in this case, the user can have no intention to actually control the portable device 100. Accordingly, an unnecessary control operation unintended by the user can be generated.

Referring to FIG. 2B, the user can bend the flexible display 110 while gripping both edges of the flexible display 110. In this case, the flexible display 110 can be bent intentionally by the user. In particular, the user can bend the flexible display 110 to control the portable device 100 according to bending of the flexible display 110. Accordingly, in this case, the portable device 100 can perform a control operation corresponding to bending of the flexible display 110.

Hereinafter, as described above, by determining whether the user intended the control of the portable device 100, a method for controlling a portable device 100 corresponding to bending of the flexible display 110 is described herein.

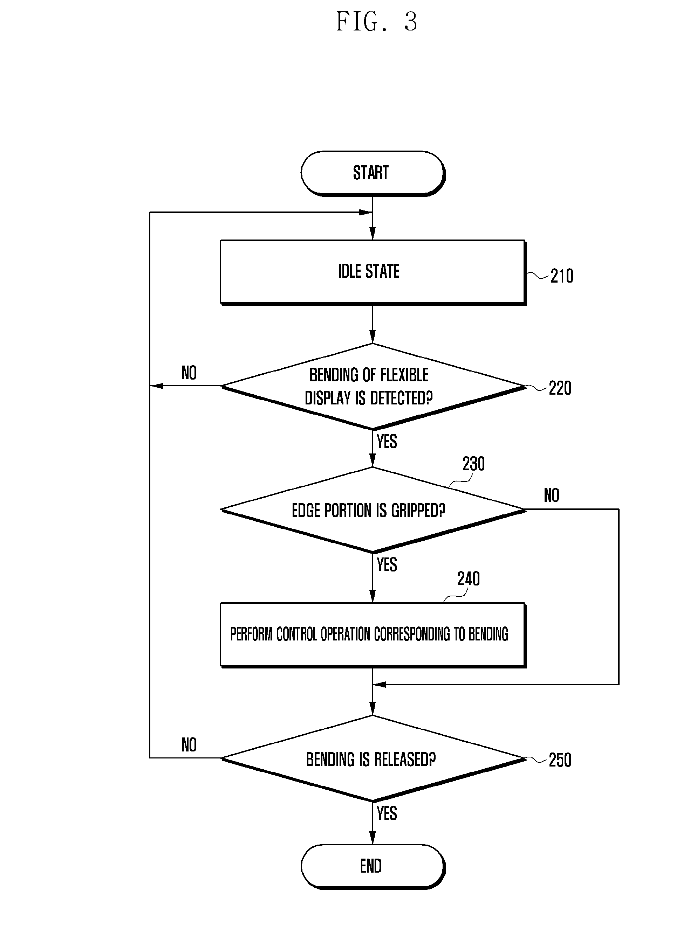

FIG. 3 is a flowchart illustrating an example method for controlling a portable device according to this disclosure.

First, a controller 130 can be operated in an idle state at operation 210.

The controller 130 can be operated in a lock mode or an idle mode or drive a certain application, program, or service. For example, the controller 130 can be configured to drive an electronic book application, an Internet application, a character application, a memo application, or a multi-media playback application.

Moreover, the controller 130 can be configured to control the flexible display 110 in order to display a screen corresponding to the idle state. For example, screens displayed on the flexible display 110 can include a lock screen, an idle screen, an image view screen, a music or moving image playback screen, a web page screen, a viewer screen such as an electronic book, a memo screen, or a character screen. The controller 130 can be configured to simultaneously drive two or more applications. In this case, an application operated with a foreground can be displayed on the flexible display 110. An application operated with a background may not be displayed on the flexible display 110. In the idle state, the flexible display 110 can be in a flat state that is not bent.

Next, the controller 130 can be configured to determine whether bending of the flexible display 110 is detected at operation 220.

A sensor connected to the flexible display 110 or the sensor unit 120 provided in the portable device 100 can be configured to detect the bending occurred in the flexible display 110 and to send a corresponding control signal to the controller 130. The control signal can include a degree of bending. For example, a control signal can include curvature information indicative of the degree of bending. The control signal can also include information related to a location in which the bending is generated.

The controller 130 can be configured to determine whether the flexible display 110 is bent according to the sent control signal. The controller 130 can be configured to determine whether the flexible display 110 is bent based on the curvature information of the flexible display 110 included in the control signal.

In detail, the controller 130 can previously set and store a first threshold curvature to determine that the flexible display 110 is bent in the storage unit 140. The threshold curvature can be set in manufacturing or by selection of the user. If a curvature greater than a threshold curvature is detected in a certain region of the flexible display 110, the controller 130 can be configured to determine that a corresponding region is bent.

Further, the controller 130 can be configured to determine a location of the bent region based on the control signal. The controller 130 can be configured to extract a coordinate for the bent region in order to determine a location of the bent region on the flexible display 110.

When the bending is not detected or when the bending is detected but the curvature is less than the threshold curvature, the controller 130 can be configured to return to the idle state.

When the bending of the flexible display 110 is detected, the controller 130 can be configured to determine whether an edge portion of the flexible display 110 is gripped at operation 230.

The controller 130 can be configured to determine whether an edge portion of the flexible display 110 is gripped by a hand of the user through the sensor connected to the flexible display 110 or the sensor unit 120 provided in the portable device 100. In this case, the controller 130 can be configured to determine the grip through at least one sensor which is disposed at an edge portion of the flexible display 110.

In this case, the controller 130 can be configured to determine whether at least two edge portions of the flexible display 110 are gripped.

As shown in FIG. 2B, when a touch input is detected at an edge portion, the controller 130 can be configured to determine that the edge portion is gripped. In general, when the user intentionally bends the flexible display 110, the edge portion can be gripped by a finger. Accordingly, the touch input can be generated at an edge portion of the flexible display 110. Accordingly, in the embodiment of the present disclosure, if a touch input of the user is detected in the edge portion, the controller 130 can be configured to determine that the edge portion is gripped.

In detail, the sensor connected to the flexible display 110 or the sensor unit 120 provided in the portable device 100 can be configured to detect that a touch input is generated at an edge portion, and to generate and to send a corresponding control signal to the controller 130. For example, the sensor can include a touch sensor, a proximity sensor, an electrostatic sensor, or a pressure sensor. The controller 130 can be configured to analyze the sent control signal to determine whether the edge portion is gripped.

In various embodiments, the controller 130 can be configured to determine that an edge portion is gripped based on detection of the touch input, the proximity input, or a pressure input.

If the flexible display 110 is provided at a front surface and a rear surface of the portable device 100, the controller 130 can be configured to determine that the edge is gripped when a user input is detected at the front surface and the rear surface. For example, if one input corresponding to a thumb is detected in an edge of the front flexible display 110, and four inputs corresponding to remaining four fingers are detected at an edge of a rear flexible display 110, the controller 130 can be configured to determine that an edge is gripped. If a human body is detected around an edge portion, the controller can be configured to determine that the edge portion is gripped. When the user intentionally bends the flexible display 110, the user can grip the edge portion of the flexible display 110 by a hand. In this case, the hand of user can be located around the edge portion of the flexible display 110. Accordingly, in the embodiment of the present disclosure, if the human body is detected around the edge portion, the controller 130 can be configured to determine that the edge portion is gripped.

In detail, the sensor connected to the flexible display 110 or the sensor unit 120 provided in the portable device 100 can be configured to detect a human body located around the edge portion as well as to generate and to send a corresponding control signal to the controller 130. For example, the sensor can include a proximity sensor and an optical sensor (such as an infrared sensor, ultraviolet sensor, or the like), a temperature sensor, or a humidity sensor. The controller 130 can be configured to analyze the sent control signal to determine whether the edge portion is gripped.

In the embodiment, the controller 130 can be configured to perform an operation of determining whether the edge portion is gripped before detecting bending of the flexible display 110. That is, grip of the edge portion can be detected before the flexible display 110 is bent.

As disclosed herein, the flexible display 110 can be configured to determine that the edge portion is gripped, however, the present disclosure is not limited thereto. For example, the flexible display 110 can be configured to determine that the edge portion is gripped by various methods known actually or constructively by those skilled in the art.

When the edge portion is gripped, the controller 130 can be configured to perform a control operation corresponding to bending at operation 240.

When it is determined that the edge portion is gripped, the controller 130 can be configured to perform a control operation of the portable device 100 corresponding to the bending of the flexible display 110. In the embodiment, the controller 130 can be configured to perform a control operation according to whether a mode of controlling the portable device 100 is set in response to bending.

The controller 130 can be configured to analyze a control signal received in response to bending from a sensor connected to the flexible display 110 or the sensor unit 120 provided in the portable device 100. The controller 130 can be configured to determine a degree of bending based on the control signal. For example, a control signal can include curvature information indicative of the degree of bending. The controller 130 can also be configured to determine a location in which the bending occurs based on the control signal.

The controller 130 can be configured to determine whether a control operation corresponding to bending is achieved based on the determined information. The control operation corresponding to bending can be set during manufacturing of the portable device 100 or by the user. The control operation corresponding to bending can be stored in the storage unit 140.

If the control operation corresponding to bending is achieved, the controller 130 can be configured to perform a corresponding control operation. For example, the controller 130 can be configured to perform one or more operations such as screen division, screen mode conversion, copy/paste, and enlargement/reduction, playback/stop, or the like. In this case, the controller 130 can be configured to perform different control operations according to a location where bending occurred and a degree of bending.

The controller 130 can be configured to determine and perform a control operation corresponding to a currently driven application. For example, when a currently driven application is a multi-media playback application, the controller 130 can be configured to perform an operation to control playback such as playback and stop of multi-media, volume control, playback of a previous file/next file, and playback of a previous channel/next channel. For example, when a currently driven application is a viewer application such as a memo application, a character message application, a photograph application, or an electronic book application, the controller 130 can be configured to perform an operation to edit text or an image such as display of a previous screen/next screen, a display of scroll movement, a display of a home screen, a refresh, a display of enlargement/reduction, a control of a text size, a folder movement, or a tap movement.

In an embodiment, the controller 130 can be configured to perform a screen division operation corresponding to bending. That is, the controller 130 can be configured to control the flexible display 110 to display another screen in a divided display region by dividing a currently displayed screen based on a region where bending is detected or dividing a display region.

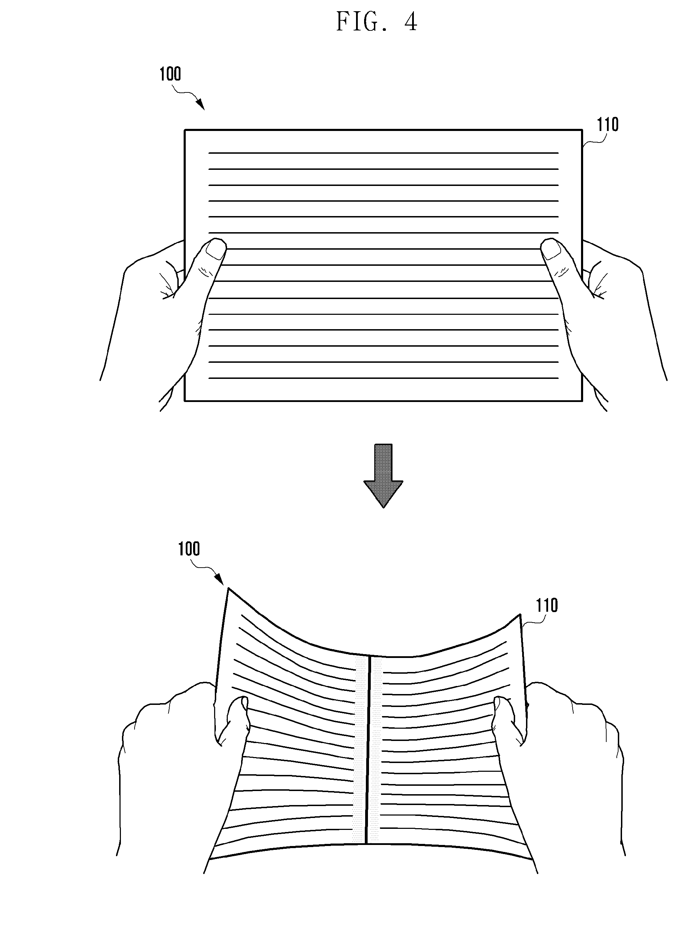

Referring to FIG. 4, the controller 130 can be configured to perform a screen division operation with respect to electronic book contents in response to bending. When the currently driven application is an electronic book application, the controller 130 can be configured to divide a screen of the electronic book contents corresponding to bending. For example, when one page of the electronic book is displayed on a screen before the bending is detected, the controller 130 can be configured to divide a screen display region based on a bend region corresponding to bending, and can be configured to control the flexible display 110 to display a plurality of pages of an electronic book on the divided display region.

The foregoing embodiment illustrates electronic book contents as an example, but it is not limited thereto, and may be applicable to an album application, a memo application, a character application, or the like.

Meanwhile, when the edge portion is not gripped, the controller 130 can be configured to abstain from performing a control operation and subsequently performs a next step. Accordingly, when the flexible display 110 is bent in a state in which the user does not intend to control of the portable device, the portable device 100 can be configured to prevent execution of an unnecessary control operation.

Next, the controller 130 can be configured to determine whether the detected bending is released at operation 250.

The controller 130 can be configured to determine whether bending of the flexible display 110 is released according to a control signal output from a sensor connected to the flexible display 110 or the sensor unit 120 provided in the portable device 100.

The controller 130 can be configured to determine whether bending of the flexible display 110 is released based on curvature information of the flexible display 110 included in the control signal. For example, when the curvature of the flexible display 110 is greater than a preset threshold curvature, the controller 130 can be configured to determine that the bending of the flexible display 110 is released.

When the bending of the flexible display 110 is not released, the controller 130 can be configured to return to an idle state to repeat the foregoing operation.

In detail, when additional bending of the flexible display 110 is detected, the controller 130 can be configured to perform a control operation corresponding to additional bending based on whether the edge portion is gripped.

The additional bending can be the same as or different from a previously generated bending. For example, the additional bending can be a bending that causes the change of curvature with respect to the previously generated bending of a first region of the flexible display 110. Alternatively, for example, the additional bending can be a bending detected at a second region other than the first region. In this case, the controller 130 can be configured to perform a control operation corresponding to a region in which bending is detected.

The controller 130 can be configured to perform a control operation for an additional bending based on a state in which a control operation is performed in response to a currently driven application or a bending of a first region. For example, the controller 130 can be configured to perform a control operation such as a screen division, a screen mode conversion, a screen mode conversion, a copy/paste, enlargement/reduction, or a playback/stop. In this case, the controller 130 can be configured to perform different control operations according to a location where bending occurred and a degree of the bending.

In an embodiment of the present disclosure, the controller 130 can be configured to perform a page turning operation for electronic book contents in response to additional bending. As shown in FIG. 4, the controller 130 can be configured to detect bending of a second region in a state in which bending of a first region, that is, bending of a central portion of the flexible display 110 is detected.

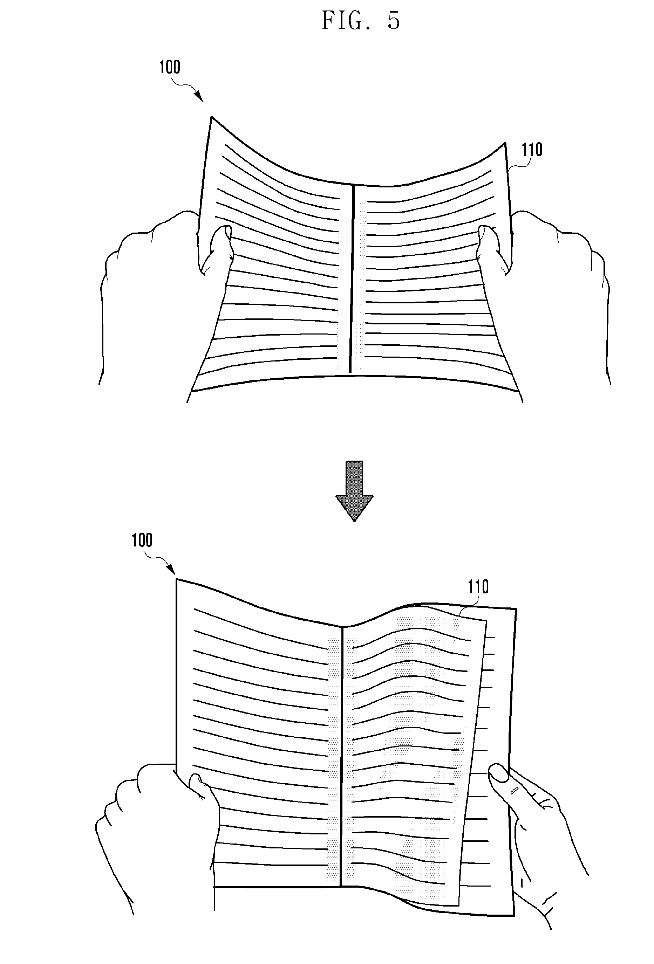

As shown in FIG. 5, bending of the second region can occur between the first region and the edge portion. In detail, the bending of the second region can occur at a region in which one page of an electronic book is displayed by a screen division. In an embodiment, a bending direction of the second region can be different from a bending direction of the first region. For example, the first region can be bent to a rear surface of the flexible display 110 and the second region can be bent to a front surface of the flexible display 110.

The controller 130 can be configured to perform a page turning operation in response to bending of the second region. The controller 130 can be configured to perform a page turning operation of an electronic book in a state in which a plurality of pages are displayed on the divided display region in response to bending of the first region. The controller 130 can be configured to perform a page turning operation for a page of an electronic book displayed on a location in which bending of the second region occurred. Referring to FIG. 5, the controller 130 can be configured to control a page turning of an electronic book displayed on a location in which bending of the second region occurred. The controller 130 can be configured to control the flexible display 110 to display a next page on a screen according to page turning.

The controller 130 can be configured to control a page turning operation based on an attribute of a bending of the second region. For example, when bending of the second region is gentle, that is, the bending of the second region has a small curvature, the controller 130 can be configured to perform a page turning with a slow speed. On the contrary, when bending of the second region is steep, that is, when the bending of the second region has a large curvature, the controller 130 can be configured to perform a page turning with a high speed or may perform chapter turning or page turning to a final page.

In addition, when bending is detected on a region in which two pages are displayed in FIG. 5, the controller 130 can be configured to control to turn page displayed on a region in which bending having a larger curvature is detected. For example, when bending is detected in the whole regions in which a left page and a right page are displayed, and the bending detected in the region in which a right page is displayed has a larger curvature, the controller 130 can be configured to perform a page turning for the right page.

In at least the above embodiment, it is illustrated that the control of an electronic book can be accomplished by an operation corresponding to bending of the flexible display 110, but it is not limited thereto. For example, an electronic book can be controlled by various methods known actually or constructively by those skilled in the art.

That is, in the multimedia playback application, the controller 130 can be configured to perform fast forward/rewind or playback of next/previous music in response to the bending of the second region, control the speed of fast winding, or perform a music jump according to curvature of bending.

In addition, when the bending of the flexible display 110 is released, the controller 130 can be configured to terminate an operation.

In this case, when there exists a control operation corresponding to release of bending of the flexible display 110, the controller 130 can be configured to perform a corresponding control operation. For example, the controller 130 can be configured to control the flexible display 110 in order to display only one screen by integrating the divided display regions.

Thereafter, the controller 130 can be configured to control the portable device 100 according to a typical state of the flexible display 110 in which bending does not occurred.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for controlling a portable device equipped with a flexible display, the method comprising:
detecting bending of the flexible display;
determining whether an edge portion of the flexible display is gripped; and
performing a control operation of the portable device corresponding to the bending when the edge portion is gripped.

2. The method of Claim 1, wherein the determining whether an edge portion of the flexible display is gripped comprises determining whether at least two edge portions of the flexible display are gripped,
wherein the performing of the control operation of the portable device comprises performing the control operation when the at least two edge portions are gripped.

3. The method of Claim 1, wherein the determining whether an edge portion of the flexible display is gripped comprises:
receiving a control signal from at least one sensor disposed at the edge portion of the flexible display; and
detecting that the edge portion is gripped according to the control signal.

4. The method of Claim 3, wherein the receiving of the control signal comprises receiving the control signal generated according to detection of at least one of a touch input, a proximity input, or a pressure input generated at the edge portion.

5. The method of Claim 3, wherein the receiving of the control signal comprises receiving the control signal generated when a human body is detected around the edge portion.

6. The method of Claim 1, further comprising: detecting bending of the flexible display in a state in which the edge portion is gripped; and
performing a control operation corresponding to the bending.

7. The method of Claim 1, wherein the performing of the control operation comprises dividing an electronic book display screen according to bending of a first region of the flexible display.

8. The method of Claim 7, further comprising:
detecting bending of a second region of the flexible display in a state in which the edge portion is gripped; and
performing a page turning of the electronic book displayed on the second region.

9. The method of Claim 8, wherein the first region and the second region are bent in different directions.

10. The method of Claim 8, wherein the performing of the page turning of the e lectronic book comprises controlling a speed of the page turning based on a curvature o f the bending of the second region.

11. A portable device comprising:
a flexible display;
a sensor unit configured to detect whether the flexible display is bent and to detect whether an edge portion of the flexible display is gripped; and
a controller configured to determine whether an edge portion of the flexible display is gripped when bending of the flexible display is detected through the sensor unit, and to perform a control operation of the portable device corresponding to the bending when the edge portion is gripped.

12. The portable device of Claim 11, wherein the controller is configured to determine whether at least two edge portions of the flexible display are gripped through the sensor unit and to perform the control operation when the at least two edge portions are gripped.

13. The portable device of Claim 11, wherein the sensor unit is disposed at the edge portion of the flexible display.

14. The portable device of Claim 13, wherein the sensor unit is configured to generate a control signal based on at least one of a touch input, a proximity input, or a pressure input detected at the edge portion and to send the generated control signal to the controller, and
the controller is configured to determine that the edge portion is gripped according to the control signal.

15. The portable device of Claim 14, wherein the sensor unit comprises at least one of a touch sensor, a proximity sensor, an electromagnetic sensor, or a pressure sensor.
